# EUROPEAN PATENT SPECIFICATION

(11) **EP 4 187 253 B1**
(45) Date of publication and mention of the grant of the patent: **02.07.2025**
(21) Application number: 21210129.9
(22) Date of filing: 24.11.2021
(51) Int. Cl.: G01N 35/04, G01N 35/00

(54) **DISTRIBUTION SYSTEM**
VERTEILUNGSSYSTEM
SYSTÈME DE DISTRIBUTION

(43) Date of publication of application: 31.05.2023
(73) Proprietor: F. Hoffmann-La Roche AG, 4070 Basel (CH); Roche Diagnostics GmbH, 68305 Mannheim (DE)
(72) Inventor: LAMBAEK, Ole, 6343 Rotkreuz (CH); SCHNARWILER, Dominik, 6343 Rotkreuz (CH); TAEYMANS, Bert, 6343 Rotkreuz (CH)
(74) Representative: Altmann Stößel Dick Patentanwälte PartG mbB

(56) References cited:
- EP-A1- 3 095 739
- EP-A1- 3 096 144

## Description

### Technical Field

The present invention relates to a distribution system. The distribution system of the present invention, as an example, may be used for controlling movements of tube holders transporting sample containers, in particular sample tubes, filled with biological fluids to be analyzed or reagents, and/or cassettes with reagents, specimen slides, tissue material, waste, disposables like pipette tips or tube caps, and/or empty tubes for aliquoting, specifically in the field of diagnostic laboratories. However, other fields of application for the system requiring controlling movement of carriers transporting payload are also feasible.

### Background art

In the field of diagnostic laboratories, generally, a plurality of samples, for example liquid samples, have to be handled automatically. The automatic handling of samples may comprise automatically transporting sample containers, specifically sample containers comprising the samples to be handled, via tube holders in the diagnostic laboratory by means of one or more distribution systems.

For example, WO 2011/138448 Al discloses a system for transporting containers between different stations, wherein the containers are accommodated in container carriers. The system comprises a control unit, which controls the transportation of the container carriers, a transporting surface, which is subdivided into sub-surfaces and on which the container carriers can be arranged in a movable manner, and drive means, wherein the drive means are activated by the control unit. One drive means in each case is assigned to one subsurface in each case. A drive means in each case is designed in order to provide an associated container carrier with driving power.

WO 2014/016199 Al describes an automation module for the manual introduction and pick up of biological specimens to be directly interfaced with a testing module for laboratory diagnostics. The automation module comprises a pair of main lanes and one of secondary lanes on which carrying devices travel for carrying tubes containing said biological specimens. The automation module is provided with separate points for the introduction and the pickup of said tubes into/from said carrying devices, said points being along the secondary lane opposite being interfaced with said testing module.

US 10,006,927 B2 discloses a method of operating a laboratory automation system. The laboratory automation system comprises a plurality of laboratory stations and a plurality of sample container carriers. The sample container carriers carry one or more sample containers. The sample containers comprise samples to be analyzed by the laboratory stations. The system also comprises a transport plane. The transport plane supports the sample container carriers. The system also comprises a drive. The drive moves the sample container carriers on the transport plane. The method comprises, during an initialization of the laboratory automation system, logically reserving at least one buffer area on the transport plane and, after the initialization of the laboratory automation system, buffering in the at least one buffer area sample container carriers carrying sample containers comprising samples waiting for a result of an analysis. Depending on the result of the analysis, the samples are further processed.

US 9,902,572 B2 describes a method of configuring a laboratory automation system. The position of a laboratory station is detected automatically. A laboratory sample distribution system and a laboratory automation system adapted to perform such a method are also described.

EP 3 410 123 A1 discloses a method of operating a laboratory sample distribution system. The laboratory sample distribution system comprises: a number of sample container carriers, wherein each of the sample container carriers comprises at least one magnetically active device and wherein each of the sample container carriers is adapted to carry at least one sample container; a number of interconnected transport plane modules, wherein each of the transport plane modules is adapted to support a number of said sample container carriers; and a number of electro-magnetic actuators, wherein below each transport plane module a number of said electro-magnetic actuators is stationary arranged in rows and columns, wherein the electro-magnetic actuators are adapted to move a sample container carrier of said sample container carriers on top of said transport plane modules along a row of said rows or along a column of said columns by applying a magnetic move force to said sample container carrier. The method comprises the steps: a) assigning at least one transport plane module of said transport plane modules to a route category, wherein at least two traffic lanes are formed on the route categorized transport plane module, wherein said sample container carriers are moved within each traffic lane in a given transport direction, wherein the transport directions of the at least two traffic lanes are opposite to each other and wherein a change from one transport direction to the opposite transport direction is not possible for said sample container carriers moved on the route categorized transport plane module; b) assigning at least one another transport plane module of said transport plane modules to a waypoint category, wherein a change from one transport direction to the opposite transport direction is enabled for said sample container carriers moved on the waypoint categorized transport plane module.

WO 2016/188865 Al describes method of operating a laboratory sample distribution system, wherein the laboratory sample distribution system comprises: a number of sample container carriers, wherein the sample container carriers are adapted to carry one or more sample containers, wherein the sample containers comprise samples to be analyzed by means of a number of laboratory stations, and a transport plan, wherein the transport plane is adapted to support the sample container carriers. The method comprises the steps: allocating an area of the transport plane as a buffer area, wherein the buffer area is adapted to store a variable number of sample container carriers, and controlling the buffer area using a puzzle-based control scheme or using an aisle-based control scheme as a function of a storage density of the buffer area.

Document EP3096144 describes a laboratory automation system (LAS) with buffer areas assigned to laboratory stations handling the samples in the LAS. The samples waiting on the buffer areas are processed according to a dynamic priority, which is assigned to the samples according to one or more priority criteria.

Despite the advantages achieved by known methods and devices, several technical challenges remain. Specifically, known routing algorithms may generally not contain any queuing logic. However, suitable queuing strategies in distribution systems may be needed to absorb and reduce system variability. These queuing strategies should have minimum impact on routing the tube holders. Further, known routing algorithms generally do not comprise a queuing logic but would route tube holders from one queue field to another queue field. However, queuing strategies must ensure that queue fields are empty on arrival of the tube holder.

### Problem to be solved

It is therefore desirable to provide methods and devices which at least partially address above-mentioned technical challenges. Specifically, a distribution system shall be proposed for reducing system variability and increasing robustness of continuous operation, in particular in changing conditions.

### Summary

This problem is addressed by a distribution system with the features of the independent claims. Advantageous embodiments are listed in the dependant claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a distribution system is disclosed. The distribution system comprises:
- a transport plane configured for distributing a plurality of tube holders, specifically a plurality of single tube holders, wherein the transport plane comprises at least one transportation area and at least one queue area, wherein the queue area comprises queues of a plurality of different queue types differentiating between tube holder with a sample container, empty tube holder, input queue and output queue;
- a drive system configured for moving the tube holders on the transport plane;
- a control system configured to control movement of the tube holders on the transport plane, wherein the control system comprises a routing system configured for calculating routes for the tube holders on the transportation area of the transport plane, wherein the control system comprises a queue manager configured for calculating routes for the tube holders in the queue area considering the different queue types.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components forming a whole. Specifically, the components may interact with each other in order to fulfill at least one common function. The system may comprise at least two components, wherein the at least two components may be handled independently or may be coupled or connectable.

The term "distribution system" as used herein is a broad term and is to be given its ordinary and customary meaning to a person of ordinary skill in the art and is not to be limited to a special or customized meaning. The term specifically may refer, without limitation, to a system configured for distributing tube holders from an initial position to a target destination. The distribution system may be an element of a laboratory automation system allowing to distribute tube holders to a target destination within the laboratory automation system. Distribution systems may be used in laboratory automation systems comprising a number of laboratory stations, for example pre-analytical, analytical and/or post-analytical stations. Distribution system are generally known by the skilled person e.g. from EP 3 095 739 A1 or WO2012/158541.

The term "tube holder", also denoted as carrier, as used herein is a broad term and is to be given its ordinary and customary meaning to a person of ordinary skill in the art and is not to be limited to a special or customized meaning. The term specifically may refer, without limitation, to a support structure configured for supporting and transporting a payload. The tube holder may be provided with appropriate holding means to support, and if required, to secure payload in a needed manner and orientation. The tube holder may be configured for receiving and/or holding at least one sample container, specifically at least one sample tube. The sample container may be or may comprise a laboratory diagnostic container or vessel, in particular a sample tube, filled with biological fluid to be analyzed, and/or cassettes filled with reagents, specimen slides, tissue material, waste, disposables like pipette tips or tube caps, and/or empty tubes for aliquoting, and the like. For example, the tube holder may be a single tube holder configured for receiving and/or holding one sample container. The tube holder can be self-propelling or can be propelled by and moved on a transport plane.

The term "tube holder with a sample container" as used herein is a broad term and is to be given its ordinary and customary meaning to a person of ordinary skill in the art and is not to be limited to a special or customized meaning. The term specifically may refer, without limitation, to a tube holder comprising at least one sample container, specifically at least one sample tube.

The term "empty tube holder" as used herein is a broad term and is to be given its ordinary and customary meaning to a person of ordinary skill in the art and is not to be limited to a special or customized meaning. The term specifically may refer, without limitation, to an unloaded tube holder. The empty tube holder may be a tube holder without a sample container. The empty tube holder may be configured for receiving at least one sample container, specifically at least one sample tube.

The term "transport plane" as used herein is a broad term and is to be given its ordinary and customary meaning to a person of ordinary skill in the art and is not to be limited to a special or customized meaning. The term specifically may refer, without limitation, to any kind of two dimensional plane, bed, layer, platform or base configured for transporting tube holders. The transport plane may be configured such that tube holders are positionable onto the transport plane, in particular on a surface of the transport plane, such that the tube holders are movable in at least two dimensions along the transport plane. For instance, the transport plane may be a sliding surface mounted in a diagnostics laboratory or the floor of a manufacturing site or inside a manufacturing hall. The transport plane may be installed vertically or horizontally including slopes. Also, curved transport planes may be possible.

The transport plane may be configured for providing movement of the tube holder by contact. The transport plane may be configured such that a tube holder can contact the surface of the transport plane, also denoted as transport surface, such that friction can be used to drive, stop and control movements of the tube holder. The tube holder may be in contact with the transport surface for a part of a node-to-node transportation duration, for example when the tube holders stop to wait for a next move. For a third dimension, either the transport plane may be formed correspondingly with corresponding limitations in upward and downward slope, or some kind of levitation mechanism may be installed such as magnetic levitation or air cushion technique with the corresponding limitations in reachable height without losing control. For vertical transportation in the third dimension, elevators or paternoster mechanisms can also be installed.

Tube holders on the transport plane may be identified by an identification or registration system. The identification and registration system can comprise at least one camera system and/or at least one optical sensor and/or at least one scanner identifying one or more of any optical signature on the tube holder or sample container, such as one or more of its size, its type, a bar code, a QR code, its payload. The barcode and/or QR code may be used to identify the tube holder. Alternatively or in addition, at least one RFID-reader system reading a unique RFID of the tube holder or sample container on the tube holder or sensors inside the transport plane can be used to identify positions and to localize the tube holders. A further option can be high precision GPS, in particular enhanced with Wi-Fi, Bluetooth and/or GSM signals. Any other suitable alternative can be in principle also used.

The transport plane may be divided into at least one transportation area and at least one queue area.

The term "transportation area" as used herein is a broad term and is to be given its ordinary and customary meaning to a person of ordinary skill in the art and is not to be limited to a special or customized meaning. The term specifically may refer, without limitation, to a partial plane of the transport plane configured for transporting of tube holders from their respective initial position to a final position, e.g. from one laboratory station to another laboratory station. The transporting of the tube holders on the transportation area may be defined by using at least one routing algorithm. An order and/or sequence of the tube holders may change during transportation on the transporting area. Specifically, main traffic of tube holders may take place on the transportation area of the transport plane. Transportation of tube holders on the transportation area, in particular the main traffic of tube holders, may be controlled by at least one routing algorithm.

The transportation area may comprise a plurality of transportation fields. Transportation fields may be defined on the transport plane by hardware requirements and/or by software. The transportation fields may be imaginary positions in the routing algorithm and/or positions on the real transport plane. For example, a transportation field may be defined on the transport plane as a position at which the tube holder can stop, start and/or change direction. In systems such as described in EP2 566 787 or WO 2013/098202, the drive system, as will be described in further detail below, may define these transportation fields by its hardware limitations. Transportation fields may be defined above an electro-magnetic coil. At these positions, it may be possible to stop the tube holder and to change its direction with the next move. The transportation fields may be defined as wanted or required to form a useful set of crossing points, junctions, start and stop positions. The transportation field may be a discrete position where the tube holder can stop. In particular, the transportation field may be defined by at least one physical entity of the drive system, such as an electro-magnetic coil or a crossing of possible ways such as rails. Each of the transportation fields may be configured for being occupied by only one tube holder. Thus, two tube holders cannot share one transportation field. The transportation fields of the transportation area may be arranged adjacent to each other to form part of the two dimensional transport plane. For example, the transportation fields may comprise a rectangular shape, such as a quadratic shape, and may be arranged in a checkerboard pattern. However, other forms of the transportation fields may be also possible, in principle, such as a polygonal shape, for example hexagonal transportation fields arranged in a honeycomb pattern.

Transportation of the tube holders in the transportation area may comprise transporting the tube holders via the transportation fields, such as from their respective initial transportation field to a final transportation field. Specifically, the transportation of the tube holders on the transportation area may comprise moving the tube holders according to their calculated routes from their initial position to the final position. The term "route" as used herein is a broad term and is to be given its ordinary and customary meaning to a person of ordinary skill in the art and is not to be limited to a special or customized meaning. The term specifically may refer, without limitation, to a set of partial routes from a start position to a final destination position. The route may be divided into one or more partial routes to intermediate destinations. The start position may be a transportation field where the tube holder stands on the transportation area when the routing algorithm starts calculating the route.

The final destination position may be a transportation field on the transportation area where the tube holder needs to go to. Final destination positions may also be fields on the transport plane of a second, separately routed area, specifically queuing fields of the queue area, as will be outlined in further detail below. A start position for one tube holder can also be in particular a final destination position for another tube holder or more particular for the same tube holder.

The routes of the tube holders on the transportation area may be executed by an execution unit, specifically considering the calculated route, and may comprise one or more moves of the tube holder. The term "move" may refer to an "action" and may not include the waiting time before the next move will take place. A move may be defined as one movement of a tube holder in a straight line, starting from one transportation field and stopping at a second, different transportation field. A move can comprise a displacement of a tube holder of one or multiple transportation fields. Specifically, a move on the transportation area may comprise a displacement of tube holders of multiple transportation fields. The move length may be a number of transportation fields for each move. Specifically, a move may be a straight-line displacement without stopping the tube holder in between. Moving from a first final destination to a second final destination may be carried out in one or more moves with intermediate destinations. Each move has a start and a stop on a transportation field on the transport plane. The intermediate destination may also be a transportation field on the transport plane. The stop of a last move of a route is either an intermediate destination or a final destination.

The term "queue area" as used herein is a broad term and is to be given its ordinary and customary meaning to a person of ordinary skill in the art and is not to be limited to a special or customized meaning. The term specifically may refer, without limitation, to a partial plane of the transport plane configured for storing a plurality of transport tubes to be processed and/or to be held for being processed by the transport area. For example, the queue area may have a function of a buffer. The term "queue" as used herein is a broad term and is to be given its ordinary and customary meaning to a person of ordinary skill in the art and is not to be limited to a special or customized meaning. The term specifically may refer, without limitation, to a collection of tube holders to be stored and/or buffered, to be processed and/or to be held for being processed by the transport area. The queue may be designed such that the tube holders are maintained in a sequence, wherein tube holders can be added, also denoted as enqueuing, to the queue at one end of the sequence and can be removed from the queue from the other end of the sequence. The end of the sequence at which tube holders can be added may be called the back, tail, or rear of the queue. The other end, at which the tube holders can be removed, also denoted as dequeuing, may be called the head or front of the queue. For example, tube holders may be queued for being one or more of: removed from the transport plane, specifically being removed from the queue area of the transport plane, for example in order to supply connected devices, such as laboratory stations, with tube holders and/or sample tubes; inserted to the transport plane, specifically being inserted to the transportation area of the transport plane. The queue area may be operated as a first-in-first-out (FIFO) queue such that the first tube holder added to the queue area will be the first one to be removed. However, other queues, such as random access queues or queues comprising tube holders with enhanced priority, are also feasible.

The queue area may comprise a plurality of queue fields. The queue fields of the queue area may be embodied similar to the transportation fields of the transportation area. However, queue fields may comprise positions on the transport plane which have a special functionality, e.g. where a tube holder, a part of the sample, or a consumable is handed over from or to the transport plane to or from e.g. an analyzer or pre- or post-analytical system or storage system. Analogous to the transportation fields of the transport area, the queue fields may be arranged adjacent to each other to form part of the two dimensional transport plane. For example, the queue fields may comprise a rectangular shape, such as a quadratic shape, and may be arranged in a checkerboard pattern. However, other forms of the queue fields may be also possible, in principle, such as a polygonal shape, for example hexagonal queue fields arranged in a honeycomb pattern.

Tube holders may be movable in the queue area. Specifically, tube holders may be movable in the queue area according to the routes calculated by the queue manager. The routes of tube holders in the queue area may be or may comprise a set of partial routes from a start position to a final destination position, wherein the start position and/or the final destination position of the route may be queue fields. Specifically, the route may comprise one or more moves of the tube holder via the queue fields. A move may be defined as one movement of a tube holder in a straight line, starting from one queue field and stopping at a second, different queue field. A move can comprise a displacement of a tube holder of one or multiple queue fields. For example, a move on the queue area may comprise a move adding a tube holder to a respective queue. Thus, in this case, the move may comprise a displacement of the tube holder to be added to a certain queue to the back of the queue. Alternatively or additionally, a move on the queue may comprise a move of a queueing tube holder, i.e. of a tube holder comprised by a certain queue. In this case, the move may comprise a displacement of the queueing tube holder as far ahead as possible in order to advance further in the queue. A move of the tube holder inside the respective queue in one direction may be as far ahead as possible without causing any collisions or claiming fields of the transport plane of other tube holders. The moves of the tube holders in the queue area may be performed, similar to the moves of the tube holders in the transportation area, by the drive system, as will be described in further detail below. However, moves on the queue area may maintain an order or sequence of the tube holders within the respective queue.

In the queue area, tube holders may form queues according to different queue types differentiating between tube holder with a sample container, empty tube holder, input queue and output queue. The term "queue type" as used herein is a broad term and is to be given its ordinary and customary meaning to a person of ordinary skill in the art and is not to be limited to a special or customized meaning. The term specifically may refer, without limitation, to different usages of parts of the queue area. The queue type may be at least one criterion distinguishing parts of the queue area depending on the type of tube holders queued in the respective part. The type of tube holder may refer to one or more of tube holders with a sample container, empty tube holders, tube holders designated for being inserted to the transportation area, and tube holders designated for being removed from the transportation area.

The queue area comprises queues of a plurality of different queue types differentiating between tube holder with a sample container, empty tube holder, input queue and output queue.

The term "input queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for comprising tube holders designated for being inserted to the transportation area of the transport plane.

The term "output queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for comprising tube holders designated for being removed from the transport plane, specifically from the queue area of the transport plane.

For example, the queue area may comprise a sample container output queue, a sample container input queue, an empty tube holder output queue, and an empty tube holder input queue. The term "sample container output queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for supplying connected devices with sample containers. In the sample container output queue, tube holders with a sample container may be queueing. The sample container output queue may be used to modulate fluctuations in number of sample container arrivals. The sample container output queue may be split into emergency (STAT) samples and routine samples. Emergency (STAT) samples may be samples with enhanced priority. The STAT samples may be samples which require a short turnaround time, e.g. an hour or less from specimen receipt until result reporting. The queue manager may be configured for calculating the route of a tube holder loaded with a STAT sample so that it can skip part of the sample container output queue. The sample container output queue may be used for continuous supply of sample containers to connected devices, such as to laboratory stations of laboratory automation systems. "STAT" may be a type of priority. Orders, samples or any other element with this priority may be to handled by the system with the highest priority. A STAT sample may be a sample that is or is required to be processed with the highest priority. "Routine" may be a type of priority. Elements, e.g. samples, with this priority may be handled by the system in a regular way. A routine sample may be a sample that is processed in a regular way, thus not with high priority.

The term "sample container input queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for queuing tube holders entering the transport plane. The sample container input queue may be configured for storing tube holders with a sample container entering the transportation area. For tube holders in the sample container input queue, the control system, specifically the routing system, may decide their next target considering delays between query and response. The tube holders may be stored in the sample container input queue until their next target is known. The sample container input queue may be a random access queue or a First-IN-First-out queue. Random access queue may be beneficial when long delays for the query occur.

The term "empty tube holder output queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for storing empty tube holders for being provided to connected devices. The empty tube holder output queue may be configured for providing a constant supply of empty tube holders at a loading position of the transport plane to connected devices. The empty tube holder output queue may guarantee constant supply such that connected devices reach their stated throughput. The empty tube holder output queue may have a high capacity in order to modulate fluctuations of tube holder demands by connected devices.

The term "empty tube holder input queue" as used herein is a broad term and is to be given its ordinary and customary meaning to a person of ordinary skill in the art and is not to be limited to a special or customized meaning. The term specifically may refer, without limitation, to a queue configured and/or assigned and/or reserved for storing empty tube holders for being provided to the transport plane, specifically to the transportation area of the transport plane. The empty tube holder input queue may be configured for storing empty tube holder from a transport interface of the distribution system to provide access to the transportation area to travel to its next target. The empty tube holder input queue may have storage capacity in order to account for delays of empty tube holders moving from the empty tube holder input queue to the transportation area when traffic on the transportation area is dense. The empty tube holder input queue may free connected devices from empty tube holders in order to not block the connected devices.

The queues may be static queues which are placed such their purpose is fulfilled while minimizing their obstruction with a main traffic of tube holders on the transportation area. Each of the queues may comprise a plurality of queue fields. The queue fields may be fields on the transport plane.

The transport plane may comprise at least one dynamic shared queue having at least one dynamic shared queue field. The term "dynamic shared queue field" as used herein is a broad term and is to be given its ordinary and customary meaning to a person of ordinary skill in the art and is not to be limited to a special or customized meaning. The term specifically may refer, without limitation, to a transportation field which is temporarily assignable as queue field. The routing system may be configured for dynamically assigning the at least one dynamic shared queue field of the dynamic shared queue to every tube holder on the transport plane. The dynamic shared queue may be a random access queue. Tube holders within the dynamic shared queue may be not movable. The dynamic shared queue field may specifically be a queue with capacity of one tube holder, where tube holders can drive on from the transportation area and later drive off again. Tube holders may only drive on the dynamic shared queue field if it is the final target field. The routing system may be configured for assigning all dynamic shared queue fields to a list of forbidden fields such that tube holders can only drive on a dynamic shared queue field if it is its final target field.

A location of the at least one dynamic shared queue field on the transport plane may be selected according to the following rules:
- a field of the transport plane, if it does not contain static queues or if it is directly connected to a field with static queues; and
- if there are exactly three neighboring fields physically available.

For example, the dynamic shared queue may be arranged on an outer lane of the transportation area. The location of the dynamic shared queue fields may be selected such that its interference with the main traffic on the transportation area is minimal and a high number of dynamic shared queue fields are available in a layout. The location of the dynamic shared queue fields may be selected such that fields on the transportation area having only two neighboring fields may be excluded, e.g. transportation fields around corners may be excluded from dynamic shared queues as they may be not reachable. The term "high" number of dynamic shared queue fields may be referred to in relation to the number of tube holders on the system. A high ratio may be 1:1 and/or situations where more shared queue fields than tube holders are available. The term "high" number of dynamic shared queue fields may also be referred to in relation to density. The density may relate to the ability to get sample carriers from the dynamic queue to the static queue in time to avoid starvation. This may be dependent on one or more of drive velocity, drive time predictability and the density, e.g. how much queue capacity is available in the neighborhood. One can trade off the local dynamic shared queue capacity and static queue capacity with the risk of starvation. One would need to pick a meaningful trade off for the application. A very large static queue would be a good guard against starvation, but obviously comes at a cost. The categorization as "high" number of dynamic shared queue fields may depend on the system size.

A combination of static queues, which may be used by tube holders being assigned to a specific connected device, and dynamic shared queues, which may be used by all tube holders on the transport plane, may allow a proper queueing behavior while minimizing the overall queue capacity and a bad impact on the main traffic on the transport plane.

As outlined above, the distribution system comprises the drive system configured for moving the tube holders on the transport plane and the control system configured to control movement of the tube holders on the transport plane. The term "drive system" as used herein is a broad term and is to be given its ordinary and customary meaning to a person of ordinary skill in the art and is not to be limited to a special or customized meaning. The term specifically may refer, without limitation, to a system configured for moving tube holders on the transport plane. The drive system can be implemented in the tube holders itself e.g. wheels connected to an electric motor with or without connected battery and electronics. Another possibility are linear motors. Also possible are passive tube holders. For instance, the tube holder may comprise and/or may be at least one magnetic element. For example, a magnetic device is fixed in the tube holder and/or the tube holders may be made of a magnetic, e.g. paramagnetic, material. A magnetic force may be provided by magnetically active and drivable elements such as electro-magnetic coils, enforcing the tube holders to move by generated electro-magnetic fields. The coils can be installed under, above, besides or in the transport plane. For instance, an arrangement of magnetic coils underneath the transport plane is described e.g. in EP 2 566 787 or WO 2013/098202. Additionally or alternatively, the coils may be inside the tube holder and the permanent magnets in the transport plane.

The term "control system" as used herein is a broad term and is to be given its ordinary and customary meaning to a person of ordinary skill in the art and is not to be limited to a special or customized meaning. The term specifically may refer, without limitation, to an arbitrary system configured for performing the named operations, preferably by using at least one data processing device and, more preferably, by using at least one processor and/or at least one application-specific integrated circuit. Thus, as an example, the at least one control system may comprise at least one data processing device having a software code stored thereon comprising a number of computer commands. The control system may provide one or more hardware elements for performing one or more of the named operations and/or may provide one or more processors with software running thereon for performing one or more of the named operations. The control system may comprise one or more programmable devices such as one or more computers, application-specific integrated circuits (ASICs), Digital Signal Processors (DSPs), or Field Programmable Gate Arrays (FPGAs) which are configured to perform a control function. The control system may comprise at least one computer. The computer can be an embedded computer e.g. micro controller or programmable logic devices such as FPGAs. Additionally or alternatively, however, the control system may also fully or partially be embodied by hardware.

As outlined above, the control system comprises the routing system configured for calculating routes for the tube holders on the transportation area of the transport plane and the queue manager configured for calculating routes for the tube holders in the queue area considering the different queue types. Additionally, the control system may comprise at least one execution unit for execution of movements of the tube holders according to the calculated routes.

The term "routing system" as used herein is a broad term and is to be given its ordinary and customary meaning to a person of ordinary skill in the art and is not to be limited to a special or customized meaning. The term specifically may refer, without limitation, to an arbitrary system configured for calculating routes for moving the tube holders on the transport plane. The routing system may comprise at least one data processing device. The routing system may be configured for using at least one algorithm, in particular denoted as routing algorithm. A routing algorithm may be an algorithm calculating a route for each tube holder on the transport plane from a start position to an intermediate destination position towards a final destination position. The routing algorithm may calculate several straight moves for each route starting with the current position of the tube holder as a starting position to an intermediate destination position. The planned route, also denoted as routing plan, may comprise all moves or only the next few moves to carry out until a second final destination is reached. The routing system may be functionally separated from the execution unit. However, the two processes of calculating routes performed by the routing system and executing the calculated routes performed by the execution unit can run on the same computer, on the same or multiple computation cores etc. or on different computers and/or microcontrollers etc.

The term "queue manager" as used herein is a broad term and is to be given its ordinary and customary meaning to a person of ordinary skill in the art and is not to be limited to a special or customized meaning. The term specifically may refer, without limitation, to a hardware and/or software implemented system configured for calculating routes for the tube holders in the queue area considering the different queue types. The queue manager may comprise at least one data processing device, specifically being comprised by the control system. Additionally or alternatively, the queue manager may be a software implemented system comprising instructions, e.g. at least one algorithm, which, when executed by the control system, cause the control system to perform the queueing logic as described in further detail above. The queue manager may be configured for routing tube holders, specifically for calculating and/or executing routes for the tube holders, in the queue area of the transport plane.

At least one queue field of the respective queue may be an interface field between the transportation area and the at least one queue area. On the interface field, one field moves may be allowed from and to the interface field on a side of the queue area. For example, a first queue field of the respective output queue and a last queue field of the respective input queue may be interface fields. The routing system and the queue manager may be configured for being aware of movement within the interface fields, specifically of movement of the queueing tube holders within the interface fields.

The sample container output queue may comprise an interface field to the STAT queue. The STAT queue may be the sample container output queue with the emergency (STAT) samples. The interface field may be configured for providing an interface to STAT samples to merge into the output queue of the routine samples. Starting from this interface field, the sample container output queue may comprise tube holders with both priorities, STAT sample and routine samples. In case tube holders in the sample container output queue have to be rerouted, it may be possible to route the respective tube holders through the connected devices and/or enter back to the sample container input queue and/or directly retrieve the respective tube holders through a potentially empty STAT queue and/or sample container input queue.

The queue manager and the routing system may be configured for interacting with each other. As outlined above, at least one queue field of the respective queue may be an interface field between the transportation area and the queue area. At the interface field, tube holders may be handed over from the routing system to the queue manager, and/or vice versa. The handing over may comprise removing the tube holders from the control of the routing system or the queue manager, and adding the tube holder to the queue manger or routing system, respectively. The interface fields may be located at the first queue field of the respective output queues and the last queue field of the respective input queues. Whenever there is a movement on one of those fields, both the routing system and the queue manager may be aware of the movement and may be ready to accept the moved tube holder.

In case a tube holder is routed by the routing system to the interface field, the tube holder may drive onto the interface field if the interface field is not occupied and/or reserved by other tube holders. The queue manager may be configured for adding the tube holder to the routing system by an appropriate call to the routing system before routing the tube holder to the interface field. If the tube holder is successfully added to the routing algorithm, the move onto the interface field may be executed.

In case a tube holder finishes a move away from the interface field, the tube holder may be removed from the routing system and/or queue manager. For the routing system, the interface fields may be added to the forbidden fields list, where moves are only allowed when it is their final target. Due to interference of unpredictable waiting times on the interface field with optimal performance of the routing system, only one field moves may be allowed from and to the interface field by the queue manager. This may reduce an occupancy on the interface field and may simplify the handover between the routing system and the queue manager. Further, the combination of the routing system and the queue manager may increase robustness of the distribution system under changing conditions, specifically for continuous operation. Specifically, the distribution system may allow reducing system variability. Generally, many stochastic influences introduce a high system variability, e.g. on the input side (arrival pattern, assigned workflows, and the like), the transport system itself (drive times, communication delays, and the like) and the operation (failures, rerouting, and the like). In order to handle the complex traffic problem, the present invention allows to reduce the system variability by a proper queueing management. A more deterministic problem with a lower complexity can be offered to the actual routing algorithm.

Further disclosed and proposed herein, not being part of the claimed invention, is a computer program including computer-executable instructions for performing the controlling of movements of the tube holders on the transport plane, calculating of routes for the tube holders on the transportation area of the transport plane, and/or calculating of routes for the tube holders in the queue area considering the different queue types, when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps for the controlling of movements of the tube holders on the transport plane, calculating of routes for the tube holders on the transportation area of the transport plane, and/or calculating of routes for the tube holders in the queue area considering the different queue types, as indicated above may be performed by using a computer or a computer network, preferably by using a computer program.

Further disclosed and proposed herein, not being part of the claimed invention, is a computer program product having program code means, in order to perform the controlling of movements of the tube holders on the transport plane, calculating of routes for the tube holders on the transportation area of the transport plane, and/or calculating of routes for the tube holders in the queue area considering the different queue types, the program is executed on a computer or computer network. Specifically, the program code means may be stored on a computer-readable data carrier and/or on a computer-readable storage medium.

Further disclosed and proposed herein, not being part of the claimed invention, is a data carrier having a data structure stored thereon, which, after loading into a computer or computer network, such as into a working memory or main memory of the computer or computer network, may execute the controlling of movements of the tube holders on the transport plane, calculating of routes for the tube holders on the transportation area of the transport plane, and/or calculating of routes for the tube holders in the queue area considering the different queue types.

Further disclosed and proposed herein, not being part of the claimed invention, is a computer program product with program code means stored on a machine-readable carrier, in order to perform the controlling of movements of the tube holders on the transport plane, calculating of routes for the tube holders on the transportation area of the transport plane, and/or calculating of routes for the tube holders in the queue area considering the different queue types, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein, not being part of the claimed invention, is a modulated data signal which contains instructions readable by a computer system or computer network, for performing the controlling of movements of the tube holders on the transport plane, calculating of routes for the tube holders on the transportation area of the transport plane, and/or calculating of routes for the tube holders in the queue area considering the different queue types.

Referring to the computer-implemented aspects of the invention, one or more of the controlling of movements of the tube holders on the transport plane, calculating of routes for the tube holders on the transportation area of the transport plane, and/or calculating of routes for the tube holders in the queue area considering the different queue types, may be performed by using a computer or computer network. Thus, generally, any of the controlling of movements of the tube holders on the transport plane, calculating of routes for the tube holders on the transportation area of the transport plane, and/or calculating of routes for the tube holders in the queue area considering the different queue types, may be performed by using a computer or computer network.

Specifically, further disclosed herein, not being part of the claimed invention, are:
- a computer or computer network comprising at least one processor, wherein the processor is adapted to perform the controlling of movements of the tube holders on the transport plane, calculating of routes for the tube holders on the transportation area of the transport plane, and/or calculating of routes for the tube holders in the queue area considering the different queue types,
- a computer loadable data structure that is adapted to perform the controlling of movements of the tube holders on the transport plane, calculating of routes for the tube holders on the transportation area of the transport plane, and/or calculating of routes for the tube holders in the queue area considering the different queue types, while the data structure is being executed on a computer,
- a computer program, wherein the computer program is adapted to perform the controlling of movements of the tube holders on the transport plane, calculating of routes for the tube holders on the transportation area of the transport plane, and/or calculating of routes for the tube holders in the queue area considering the different queue types, while the program is being executed on a computer,
- a computer program comprising program means for performing the controlling of movements of the tube holders on the transport plane, calculating of routes for the tube holders on the transportation area of the transport plane, and/or calculating of routes for the tube holders in the queue area considering the different queue types, while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the controlling of movements of the tube holders on the transport plane, calculating of routes for the tube holders on the transportation area of the transport plane, and/or calculating of routes for the tube holders in the queue area considering the different queue types, after having been loaded into a main and/or working storage of a computer or of a computer network, and
- a computer program product having program code means, wherein the program code means can be stored or are stored on a storage medium, for performing the controlling of movements of the tube holders on the transport plane, calculating of routes for the tube holders on the transportation area of the transport plane, and/or calculating of routes for the tube holders in the queue area considering the different queue types,, if the program code means are executed on a computer or on a computer network.

### Short description of the Figures

Further optional features and embodiments will be disclosed in more detail in the subsequent description of embodiments, preferably in conjunction with the dependent claims. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a distribution system in a schematic view;
- Figure 2: shows exemplary static queues on a transport plane; and
- Figure 3: shows exemplary dynamic shared queues on a transport plane.

### Detailed description of the embodiments

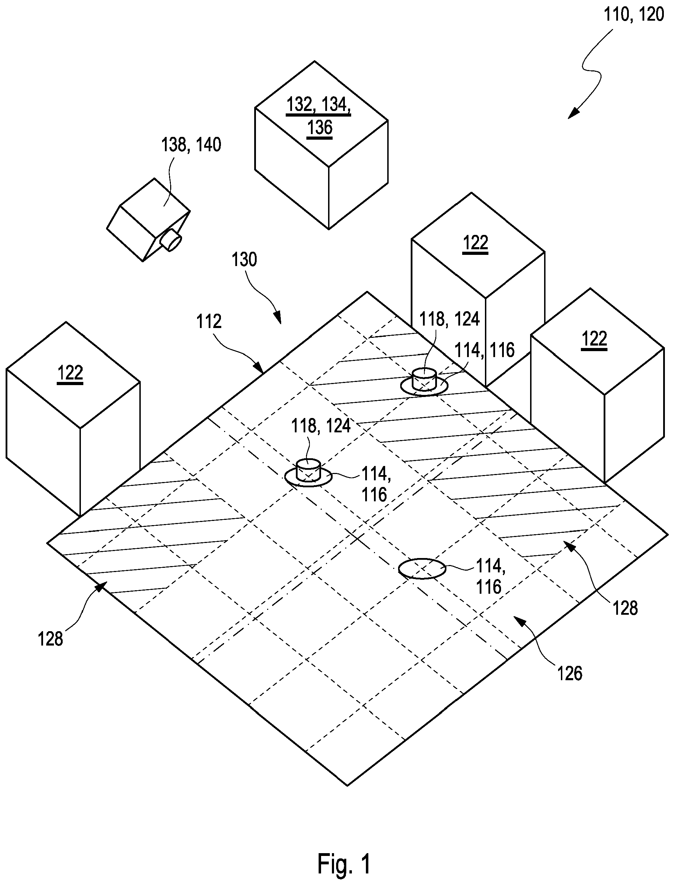

Figure 1 shows an exemplary embodiment of a distribution system 110 in a schematic view. The distribution system 110 comprises a transport plane 112 configured for distributing a plurality of tube holders 114. Specifically, the tube holder 114 may be a single tube holder 116 configured for receiving and/or holding one sample container 118. However, the tube holders 114 to be distributed by the transport plane 112 may also comprise tube holder racks (not shown in Figure 1) configured for receiving multiple sample containers 118.

The distribution system 110 may be an element of a laboratory automation system 120 allowing to distribute tube holders 114 to a target destination within the laboratory automation system 120. As shown in Figure 1, the distribution system 110 may be used in laboratory automation systems 120 comprising a number of laboratory stations 122, for example pre-analytical, analytical and/or post-analytical stations. Thus, in this example, the sample container 118 received by the tube holder 114 may comprise a laboratory diagnostic container or vessel, in particular a sample tube 124, filled with biological fluid to be analyzed, and/or cassettes filled with reagents, specimen slides, tissue material, waste, disposables like pipette tips or tube caps, and/or empty tubes for aliquoting, and the like.

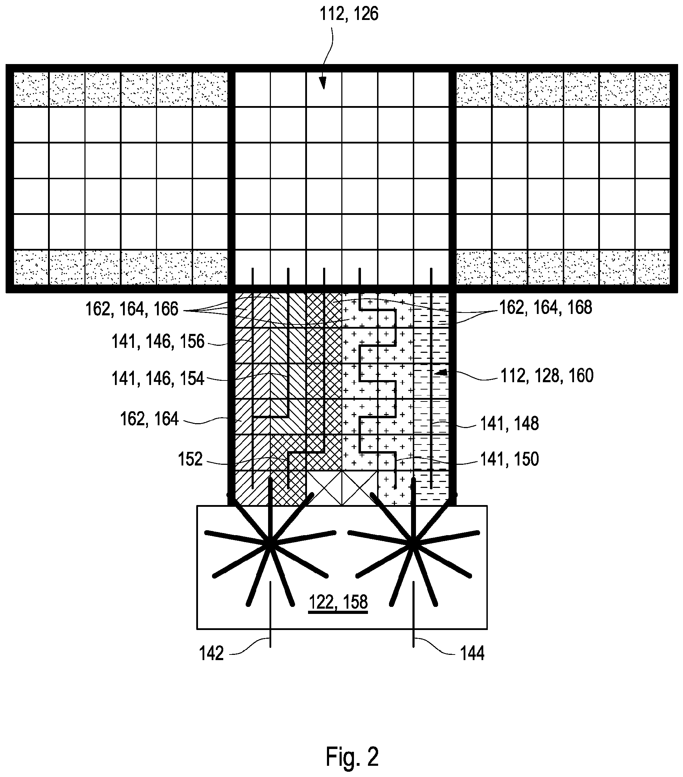

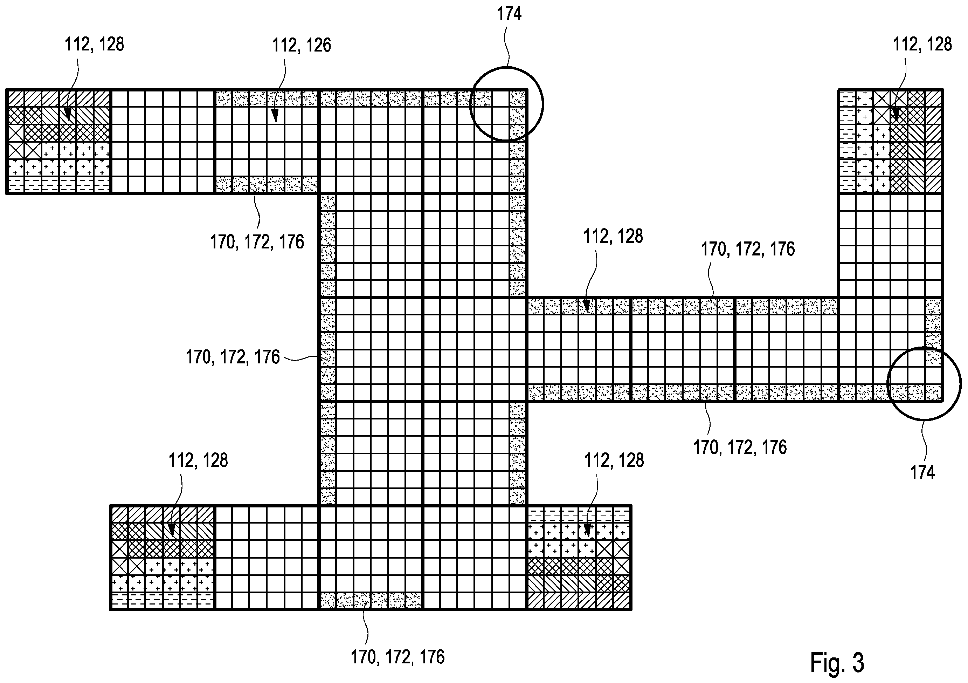

The transport plane 112 comprises at least one transportation area 126 and at least one queue area 128. The queue area 128 comprises queues of a plurality of different queue types differentiating between tube holder 114 with a sample container 118, empty tube holder 114, input queue and output queue. Exemplary queues, specifically static queues and dynamic shared queues, are shown in Figure 2 and 3, respectively. Thus, for more details regarding the queues, reference is made to the description of Figures 2 and 3.

The distribution system 110 further comprises a drive system 130 configured for moving the tube holders 114 on the transport plane 112. In the example of Figure 1, the drive system 130 may be partially implemented in the tube holders 114 itself. The tube holders 114 may be passive tube holders. For instance, the tube holder 114 may comprise and/or may be at least one magnetic element. For example, a magnetic device is fixed in the tube holder 114 and/or the tube holders 114 may be made of a magnetic, e.g. paramagnetic, material. A magnetic force may be provided by magnetically active and drivable elements such as electro-magnetic coils (not shown in Figure 1), enforcing the tube holders 114 to move by generated electro-magnetic fields. The coils can be installed under, above, besides or in the transport plane 112.

The distribution system 110 comprises a control system 132 configured to control movement of the tube holders 114 on the transport plane 112. The control system 132 comprises a routing system 134 configured for calculating routes for the tube holders 114 on the transportation area 126 of the transport plane 112. Further, the control system 132 comprises a queue manager 136 configured for calculating routes for the tube holders 114 in the queue area 128 considering the different queue types.

Tube holders 114 on the transport plane 112 may be identified by an identification or registration system 138. As shown in Figure 1, the identification and registration system 138 may be a camera system 140 for identifying one or more of any optical signature on the tube holder 114 or sample container 118, such as its size, its type, a bar code, a QR code, its payload. The barcode and/or QR code may be used to identify the tube holder 114. However, other systems such as optical sensors and scanners, RFID-reader systems reading a unique RFID of the tube holder 114 or sample container 118 on the tube holder 114 or sensors inside the transport plane 112, can be used to identify positions and to localize the tube holders 114. A further option can be high precision GPS, in particular enhanced with Wi-Fi, Bluetooth and/or GSM signals. Any other suitable alternative can be in principle also used.

Figure 2 shows exemplary static queues 141 on the transport plane 112. The queues in this example may be static queues 141 which are placed such their purpose is fulfilled while minimizing their obstruction with a main traffic of tube holders 114 on the transportation area 126. As can be seen in Figure 2, the static queues 141 may be placed next to a laboratory station 122 of the laboratory automation system 120, and, as an example, may be placed on the queue area 128 branching from the transportation area 126 to minimize the obstruction with the main traffic of tube holders 114 on the transportation area 126. The laboratory station 122 may specifically be configured for picking (denoted by reference number 142) and/or placing (denoted by reference number 144) tube holders 114 and/or sample containers 118 from the transport plane 112.

In the example shown in Figure 2, the queue area 128 may comprise a sample container output queue 146, a sample container input queue 148, an empty tube holder output queue 150, and an empty tube holder input queue 152. In the sample container output queue 146, tube holders 114 with a sample container 118 may be queueing. The sample container output queue 146 may be used to modulate fluctuations in number of sample container 118 arrivals. The sample container output queue 146 may be split into emergency (STAT) samples and routine samples, specifically into a queue of emergency (STAT) samples 154 and a queue of routine samples 156. Emergency (STAT) samples may be samples with enhanced priority. The queue manager 136 may be configured for calculating the route of a tube holder 114 loaded with a STAT sample so that it can skip part of the sample container output queue 146. The sample container output queue 146 may be used for continuous supply of sample containers 118 to connected devices, such as to at least one of the laboratory station 122 of the laboratory automation system 120.

The sample container input queue 148 may be configured for storing tube holders 114 with a sample container 118 entering the transport plane 112. For tube holders 114 in the sample container input queue 148, the control system 132, specifically the routing system 134, may decide their next target considering delays between query and response. The tube holders 114 may be stored in the sample container input queue 148 until their next target is known. The sample container input queue 148 may be a random access queue or a First-IN-First-out queue. Random access queue may be beneficial when long delays for the query occur.

The empty tube holder output queue 150 may be configured for providing a constant supply of empty tube holders 150 at a loading position 158 of the transport plane 112 to connected devices, specifically to the laboratory station 122. The empty tube holder output queue 150 may guarantee constant supply such that connected devices reach their stated throughput. The empty tube holder output queue 150 may have a high capacity since it is not predictable when empty tube holders 114 are needed in connected devices.

The empty tube holder input queue 152 may be configured for storing empty tube holder 114 from a transport interface 160 of the distribution system 110 to provide access to the transportation area 126 to travel to its next target. The empty tube holder input queue 152 may have storage capacity in order to account for delays of empty tube holders 114 moving from the empty tube holder input queue 152 to the transportation area 126 when traffic on the transportation area 126 is dense. The empty tube holder input queue 152 may free connected devices, specifically the laboratory station 122, from empty tube holders 114 in order to not block the connected devices.

As shown in Figure 2, each of the queues 146, 148, 150, 152 may comprise a plurality of queue fields 162. The queue fields 162 may be fields on the transport plane 112. At least one queue field 162 of the respective queue may be an interface field 164 between the transportation area 126 and the at least one queue area 128. On the interface field 164, one field moves may be allowed from and to the interface field 164 on a side of the queue area 128. For example, a first queue field of the respective output queue 166 and a last queue field of the respective input queue 168 may be interface fields 164. The routing system 134 and the queue manager 136 may be configured for being aware of movement within the interface fields 164, specifically of movement of the queueing tube holders 114 within the interface fields 164. A move of the tube holder 114 inside the respective queue in one direction may be as far ahead as possible without causing any collisions or claiming fields 162 of the transport plane 112 of other tube holders 114.

Additionally, the sample container output queue 146 may comprise an interface field 164 to the STAT queue 154. The STAT queue 154 may be the sample container output queue 146 with the emergency (STAT) samples. The interface field 164 may be configured for providing an interface to STAT samples to merge into the output queue 146 of the routine samples. Starting from this interface field 164, the sample container output queue 146 may comprise tube holders 114 with both priorities, STAT samples and routine samples. In case tube holders 114 in the sample container output queue 146 have to be rerouted, it may be possible to route the respective tube holders 114 through the connected devices and/or enter back to the sample container input queue 148 and/or directly retrieve the respective tube holders 114 through a potentially empty STAT queue and/or sample container input queue 148.

Figure 3 shows exemplary dynamic shared queues 170 on a transport plane 112. In addition or as an alternative to the static queues 141, as exemplarily shown in Figure 2, the transport plane 112 may comprise at least one dynamic shared queue 170 having at least one dynamic shared queue field 172. The routing system 134 may be configured for dynamically assigning the at least one dynamic shared queue field 172 of the dynamic shared queue 170 to every tube holder 114 on the transport plane 112. The dynamic shared queue 170 may be a random access queue. Tube holders 114 within the dynamic shared queue 170 may be not movable.

The dynamic shared queue field 172 may specifically be a queue with capacity of one tube holder 114, where tube holders 114 can drive on from the transportation area 126 and later drive off again. Tube holders 114 may only drive on the dynamic shared queue field 172 if it is the final target field. The routing system 134 may be configured for assigning all dynamic shared queue fields 172 to a list of forbidden fields such that tube holders 114 can only drive on a dynamic shared queue field 172 if it is its final target field.

A location of the at least one dynamic shared queue field 172 on the transport plane 112 may be selected according to the following rules:
- a field of the transport plane 112, if it does not contain static queues 141 or if it is directly connected to a field with static queues 141; and
- if there are exactly three neighboring fields physically available.

Thus, as highlighted in Figure 3 by the circles 174 around corners of the transport plane 112, fields on the transport plane 112 having only two neighboring fields may be excluded from dynamic shared queues 170 as they may be not reachable. However, the dynamic shared queue 170 may be arranged on an outer lane 176 of the transportation area 126. The location of the dynamic shared queue fields 172 may be chosen such that its interference with the main traffic on the transportation area 126 is minimal and a high number of dynamic shared queue fields 172 are available in a layout. Outer lanes 176 on the transport plane 112 may be suitable for being assigned as a dynamic shared queue field 172.

### List of reference numbers

- 110: distribution system
- 112: transport plane
- 114: tube holder
- 116: single tube holder
- 118: sample container
- 120: laboratory automation system
- 122: laboratory station
- 124: sample tube
- 126: transportation area
- 128: queue area
- 130: drive system
- 132: control system
- 134: routing system
- 136: queue manager
- 138: identification or registration system
- 140: camera system
- 141: static queue
- 142: picking tube holders and/or sample containers
- 144: placing tube holders and/or sample containers
- 146: sample container output queue
- 148: sample container input queue
- 150: empty tube holder output queue
- 152: empty tube holder input queue
- 154: queue of emergency (STAT) samples
- 156: queue of routine samples
- 158: loading position
- 160: transport interface
- 162: queue field
- 164: interface field
- 166: first queue field of the respective output queue
- 168: last queue field of the respective input queue
- 170: dynamic shared queue
- 172: dynamic shared queue field
- 174: circle
- 176: outer lane

## Claims

1. A distribution system (110) comprising:
- a transport plane (112) configured for distributing a plurality of tube holders (114), wherein the transport plane (112) comprises at least one transportation area (126) and at least one queue area (128), wherein the queue area (128) comprises queues of a plurality of different queue types differentiating between tube holder (114) with a sample container (118), empty tube holder (114), input queue and output queue;
- a drive system (130) configured for moving the tube holders (114) on the transport plane (112);
- a control system (132) configured to control movement of the tube holders (114) on the transport plane (112), wherein the control system (132) comprises a routing system (134) configured for calculating routes for the tube holders (114) on the transportation area (126) of the transport plane (112), wherein the control system (132) comprises a queue manager (136) configured for calculating routes for the tube holders (114) in the queue area (128) considering the different queue types.

2. The distribution system (110) according to claim 1, wherein the queue area (128) comprises a sample container output queue (146), a sample container input queue (148), an empty tube holder output queue (150), and an empty tube holder input queue (152).

3. The distribution system (110) according to claim 2, wherein the sample container output queue (146) is split into emergency (STAT) samples and routine samples, wherein the queue manager (136) is configured for calculating the route of a tube holder (114) loaded with a STAT sample so that it can skip part of the sample container output queue (146).

4. The distribution system (110) according to any one of claims 2 or 3, wherein the sample container output queue (146) is used for continuous supply of sample containers (118) to connected devices.

5. The distribution system (110) according to any one of claims 2 to 4, wherein the sample container input queue (148) is configured for storing tube holders (114) with a sample container (118) entering the transport plane (112).

6. The distribution system (110) according to claim 5, wherein the sample container input queue (148) is a random access queue or a First-IN-First-out queue.

7. The distribution system (110) according to any one of claims 2 to 6, wherein the empty tube holder output queue (150) is configured for providing a constant supply of empty tube holders (114) at a loading position (158) of the transport plane (112) to connected devices.

8. The distribution system (110) according to any one of claims 2 to 7, wherein the empty tube holder input queue (152) is configured for storing empty tube holder (114) from a transport interface (160) of the distribution system (110) to provide access to the transportation area (126) to travel to its next target.

9. The distribution system (110) according to any one of claims 1 to 8, wherein the queues are static queues (141) which are placed such their purpose is fulfilled while minimizing their obstruction with a main traffic of tube holders (114) on the transportation area (126).

10. The distribution system (110) according to any one of claims 1 to 9, wherein a move of the tube holder (114) inside the respective queue in one direction is as far ahead as possible without causing any collisions or claiming fields of the transport plane (112) of other tube holders (114).

11. The distribution system (110) according to any one of claims 1 to 10, wherein each of the queues comprises a plurality of queue fields (162), wherein at least one queue field (162) of the respective queue is an interface field (164) between the transportation area (126) and the at least one queue area (128).

12. The distribution system (110) according to claim 11, wherein a first queue field of the respective output queue (166) and a last queue field of the respective input queue (168) are interface fields (164), wherein the routing system (134) and the queue manager (136) are configured for being aware of movement within the interface fields (164).

13. The distribution system (110) according to any one of claims 11 or 12, wherein the sample container output queue (146) comprises an interface field (164) to the STAT queue, wherein said interface field (164) is configured for providing an interface to STAT samples to merge into the output queue of the routine samples.

14. The distribution system (110) according to any one of claims 11 to 13, wherein on the interface field (164) one field moves are allowed from and to the interface field (164) on a side of the queue area (128).

15. The distribution system (110) according to any one of claims 1 to 14, wherein the transport plane (112) comprises at least one dynamic shared queue (170) having at least one dynamic shared queue field (172), wherein the routing system (134) is configured for dynamically assigning the at least one dynamic shared queue field (172) of the dynamic shared queue (170) to every tube holder (114) on the transport plane (112).

## Patentansprüche

1. Verteilungssystem (110), umfassend:
- eine Transportebene (112), die dafür ausgebildet ist, eine Vielzahl von Röhrchenhaltern (114) zu verteilen, wobei die Transportebene (112) mindestens einen Transportbereich (126) und mindestens einen Warteschlangenbereich (128) umfasst, wobei der Warteschlangenbereich (128) Warteschlangen einer Vielzahl von verschiedenen Warteschlangentypen umfasst, die zwischen Röhrchenhalter (114) mit einem Probenbehälter (118), leerem Röhrchenhalter (114), Aufgabewarteschlange und Ausgabewarteschlange unterscheiden;
- ein Antriebssystem (130), das dafür ausgebildet ist, die Röhrchenhalter (114) auf der Transportebene (112) zu bewegen;
- ein Steuerungssystem (132), das dafür ausgebildet ist, die Bewegung der Röhrchenhalter (114) auf der Transportebene (112) zu steuern, wobei das Steuerungssystem (132) ein Wegeleitsystem (134) umfasst, das dafür ausgebildet ist, Wege für die Röhrchenhalter (114) auf dem Transportbereich (126) der Transportebene (112) zu berechnen, wobei das Steuerungssystem (132) einen Warteschlangenmanager (136) umfasst, der dafür ausgebildet ist, Wege für die Röhrchenhalter (114) in dem Warteschlangenbereich (128) unter Berücksichtigung der verschiedenen Warteschlangentypen zu berechnen.

2. Verteilungssystem (110) nach Anspruch 1, wobei der Warteschlangenbereich (128) eine Probenbehälterausgabewarteschlange (146), eine Probenbehälteraufgabewarteschlange (148), eine Ausgabewarteschlange für leere Röhrchenhalter (150) und eine Aufgabewarteschlange für leere Röhrchenhalter (152) umfasst.

3. Verteilungssystem (110) nach Anspruch 2, wobei die Probenbehälterausgabewarteschlange (146) in Ausnahme-(STAT-)Proben und Routineproben unterteilt ist, wobei der Warteschlangenmanager (136) dafür ausgebildet ist, den Weg eines Röhrchenhalters (114), der mit einer STAT-Probe beladen ist, so zu berechnen, dass er einen Teil der Probenbehälterausgabewarteschlange (146) überspringen kann.

4. Verteilungssystem (110) nach einem der Ansprüche 2 oder 3, wobei die Probenbehälterausgabewarteschlange (146) für eine kontinuierliche Belieferung angeschlossener Vorrichtungen mit Probenbehältern (118) verwendet wird.

5. Verteilungssystem (110) nach einem der Ansprüche 2 bis 4, wobei die Probenbehälteraufgabewarteschlange (148) dafür ausgebildet ist, Röhrchenhalter (114) mit einem Probenbehälter (118), der in die Transportebene (112) eintritt, zu lagern.

6. Verteilungssystem (110) nach Anspruch 5, wobei die Probenbehälteraufgabewarteschlange (148) eine Warteschlange mit wahlfreiem Zugriff oder eine First-IN-First-OUT-Warteschlange ist.

7. Verteilungssystem (110) nach einem der Ansprüche 2 bis 6, wobei die Ausgabewarteschlange für leere Röhrchenhalter (150) dafür ausgebildet ist, eine konstante Belieferung angeschlossener Vorrichtungen mit leeren Röhrchenhaltern (114) an einer Beladeposition (158) der Transportebene (112) bereitzustellen.

8. Verteilungssystem (110) nach einem der Ansprüche 2 bis 7, wobei die Aufgabewarteschlange für leere Röhrchenhalter (152) dafür ausgebildet ist, leere Röhrchenhalter (114) aus einer Transportschnittstelle (160) des Verteilungssystems (110) zu lagern, um Zugriff auf den Transportbereich (126) bereitzustellen, um zu seinem nächsten Ziel zu fahren.

9. Verteilungssystem (110) nach einem der Ansprüche 1 bis 8, wobei die Warteschlangen statische Warteschlangen (141) sind, die so platziert sind, dass ihr Zweck erfüllt wird, während ihre Behinderung durch einen Hauptverkehr von Röhrchenhaltern (114) auf dem Transportbereich (126) minimiert wird.

10. Verteilungssystem (110) nach einem der Ansprüche 1 bis 9, wobei eine Bewegung des Röhrchenhalters (114) innerhalb der jeweiligen Warteschlange in eine Richtung so weit nach vorne wie möglich erfolgt, ohne dass Kollisionen verursacht oder Felder der Transportebene (112) anderer Röhrchenhalter (114) beansprucht werden.

11. Verteilungssystem (110) nach einem der Ansprüche 1 bis 10, wobei jede der Warteschlangen eine Vielzahl von Warteschlangenfeldern (162) umfasst, wobei mindestens ein Warteschlangenfeld (162) der jeweiligen Warteschlange ein Schnittstellenfeld (164) zwischen dem Transportbereich (126) und dem mindestens einen Warteschlangenbereich (128) ist.

12. Verteilungssystem (110) nach Anspruch 11, wobei ein erstes Warteschlangenfeld der jeweiligen Ausgabewarteschlange (166) und ein letztes Warteschlangenfeld der jeweiligen Aufgabewarteschlange (168) Schnittstellenfelder (164) sind, wobei das Wegeleitsystem (134) und der Warteschlangenmanager (136) dafür ausgebildet sind, eine Bewegung innerhalb der Schnittstellenfelder (164) zu erkennen.

13. Verteilungssystem (110) nach einem der Ansprüche 11 oder 12, wobei die Probenbehälterausgabewarteschlange (146) ein Schnittstellenfeld (164) zu der STAT-Warteschlange umfasst, wobei das Schnittstellenfeld (164) dafür ausgebildet ist, eine Schnittstelle zu STAT-Proben bereitzustellen, um mit der Ausgabewarteschlange der Routineproben zu verschmelzen.

14. Verteilungssystem (110) nach einem der Ansprüche 11 bis 13, wobei an dem Schnittstellenfeld (164) Ein-Feld-Bewegungen von und zu dem Schnittstellenfeld (164) auf einer Seite des Warteschlangenbereiches (128) zulässig sind.

15. Verteilungssystem (110) nach einem der Ansprüche 1 bis 14, wobei die Transportebene (112) mindestens eine dynamische geteilte Warteschlange (170) mit mindestens einem dynamischen geteilten Warteschlangenfeld (172) umfasst, wobei das Wegeleitsystem (134) dafür ausgebildet ist, das mindestens eine dynamische geteilte Warteschlangenfeld (172) der dynamischen geteilten Warteschlange (170) dynamisch jedem Röhrchenhalter (114) auf der Transportebene (112) zuzuordnen.

## Revendications

1. Système de distribution (110) comprenant :
- un plan de transport (112) conçu pour distribuer une pluralité de porte-tubes (114), dans lequel le plan de transport (112) comprend au moins une zone de transport (126) et au moins une zone de file d'attente (128), dans lequel la zone de file d'attente (128) comprend des files d'attente d'une pluralité de types de file d'attente différents faisant la différence entre un porte-tube (114) avec un récipient d'échantillon (118), un porte-tube (114) vide, une file d'attente d'entrée et une file d'attente de sortie ;
- un système d'entraînement (130) conçu pour déplacer les porte-tubes (114) sur le plan de transport (112) ;
- un système de commande (132) conçu pour commander le mouvement des porte-tubes (114) sur le plan de transport (112), dans lequel le système de commande (132) comprend un système d'itinéraire (134) conçu pour calculer des itinéraires pour les porte-tubes (114) sur la zone de transport (126) du plan de transport (112), dans lequel le système de commande (132) comprend un gestionnaire de file d'attente (136) conçu pour calculer des itinéraires pour les porte-tubes (114) dans la zone de file d'attente (128) en prenant en compte les différents types de file d'attente.

2. Système de distribution (110) selon la revendication 1, dans lequel la zone de file d'attente (128) comprend une file d'attente de sortie de récipients d'échantillon (146), une file d'attente d'entrée de récipients d'échantillon (148), une file d'attente de sortie de porte-tubes vides (150) et une file d'attente d'entrée de porte-tubes vides (152).

3. Système de distribution (110) selon la revendication 2, dans lequel la file d'attente de sortie de récipients d'échantillon (146) est divisée en échantillons d'urgence (STAT) et échantillons de routine, dans lequel le gestionnaire de file d'attente (136) est conçu pour calculer l'itinéraire d'un porte-tube (114) chargé avec un échantillon STAT de sorte qu'il peut éviter une partie de la file d'attente de sortie de récipients d'échantillon (146).

4. Système de distribution (110) selon l'une quelconque des revendications 2 ou 3, dans lequel la file d'attente de sortie de récipients d'échantillon (146) est utilisée pour une alimentation continue des récipients d'échantillon (118) à des dispositifs connectés.

5. Système de distribution (110) selon l'une quelconque des revendications 2 à 4, dans lequel la file d'attente d'entrée de récipients d'échantillon (148) est conçue pour stocker des porte-tubes (114) avec un récipient d'échantillon (118) entrant dans le plan de transport (112).

6. Système de distribution (110) selon la revendication 5, dans lequel la file d'attente d'entrée de récipients d'échantillon (148) est une file d'attente d'accès aléatoire ou une file d'attente de type premier entré-premier sorti.

7. Système de distribution (110) selon l'une quelconque des revendications 2 à 6, dans lequel la file d'attente de sortie de porte-tubes vides (150) est conçue pour fournir une alimentation constante de porte-tubes vides (114) au niveau d'une position de chargement (158) du plan de transport (112) à des dispositifs connectés.

8. Système de distribution (110) selon l'une quelconque des revendications 2 à 7, dans lequel la file d'attente d'entrée de porte-tubes vides (152) est conçue pour stocker un porte-tube vide (114) d'une interface de transport (160) du système de distribution (110) pour fournir un accès à la zone de transport (126) pour se déplacer jusqu'à sa cible suivante.

9. Système de distribution (110) selon l'une quelconque des revendications 1 à 8, dans lequel les files d'attente sont des files d'attente statiques (141) qui sont placées de telle sorte que leur objectif est rempli tout en minimisant leur obstruction avec un trafic principal de porte-tubes (114) sur la zone de transport (126).

10. Système de distribution (110) selon l'une quelconque des revendications 1 à 9, dans lequel un mouvement du porte-tube (114) à l'intérieur de la file d'attente respective dans une direction est aussi avancé que possible sans provoquer de collision ou occuper de champs du plan de transport (112) d'autres porte-tubes (114).

11. Système de distribution (110) selon l'une quelconque des revendications 1 à 10, dans lequel chacune des files d'attente comprend une pluralité de champs de file d'attente (162), dans lequel au moins un champ de file d'attente (162) de la file d'attente respective est un champ d'interface (164) entre la zone de transport (126) et l'au moins une zone de file d'attente (128).

12. Système de distribution (110) selon la revendication 11, dans lequel un premier champ de file d'attente de la file d'attente de sortie (166) respective et au moins un dernier champ de file d'attente de la file d'attente d'entrée (168) respective sont des champs d'interface (164), dans lequel le système d'itinéraire (134) et le gestionnaire de file d'attente (136) sont conçus pour percevoir un mouvement au sein des champs d'interface (164).

13. Système de distribution (110) selon l'une quelconque des revendications 11 ou 12, dans lequel la file d'attente de sortie de récipients d'échantillon (146) comprend un champ d'interface (164) à la file d'attente de STAT, dans lequel ledit champ d'interface (164) est conçu pour fournir une interface pour que les échantillons STAT se fondent dans la file d'attente de sortie des échantillons de routine.

14. Système de distribution (110) selon l'une quelconque des revendications 11 à 13, dans lequel sur le champ d'interface (164) les mouvements d'un champ sont permis depuis et vers le champ d'interface (164) sur un côté de la zone de file d'attente (128).

15. Système de distribution (110) selon l'une quelconque des revendications 1 à 14, dans lequel le plan de transport (112) comprend au moins une file d'attente partagée dynamique (170) ayant au moins un champ de file d'attente partagée dynamique (172), dans lequel le système d'itinéraire (134) est conçu pour attribuer de manière dynamique l'au moins un champ de file d'attente partagée dynamique (172) de la file d'attente partagée dynamique (170) à chaque porte-tube (114) sur le plan de transport (112).
